# EUROPEAN PATENT APPLICATION

(11) **EP 4 765 272 A1**
(43) Date of publication of application: **24.06.2026**
(21) Application number: 25816063.9
(22) Date of filing: 20.05.2025
(51) Int. Cl.: H01M 10/04, H01M 10/42, H01M 50/249, H01M 50/204, B60L 50/64

(54) **ELECTRODE ASSEMBLY, METHOD AND APPARATUS FOR MANUFACTURING SAME, BATTERY COMPRISING ELECTRODE ASSEMBLY, AND BATTERY PACK AND VEHICLE COMPRISING BATTERY**

(30) Priority: 29.05.2024 KR 20240070340
(71) Applicant: LG Energy Solution, Ltd., Seoul 07335 (KR)
(72) Inventor: KIM, Byung-Ju, Daejeon 34122 (KR)
(74) Representative: Goddar, Heinz J.
(86) International application number: PCT/KR2025/006836
(87) International publication number: WO 2025/249821

(57) **Abstract**

The present disclosure may provide an electrode assembly in which a positive electrode, a negative electrode, and a separator interposed therebetween are wound, wherein at least one of the positive electrode and the negative electrode includes an uncoated portion at a long side end, and a winding turn portion of the uncoated portion is provided at one end of the electrode assembly, wherein the winding turn portion includes a bending region including a plurality of uncoated portion layers configured to be bent by pressure to form a bent surface.

## Description

### TECHNICAL FIELD

The present disclosure relates to an electrode assembly, a method and device for manufacturing it, a battery including the electrode assembly, and a battery pack and a vehicle including the same.

This application is based on and claims priority from Korean Patent Application No. 10-2024-0070340, filed on May 29, 2024, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to an electric vehicle (EV) or a hybrid electric vehicle (HEV) driven by electric power sources. Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. When a higher output voltage is required, a plurality of battery cells may be connected in series to form a battery module or a battery pack. Additionally, in order to increase the charging and discharging capacity, a plurality of battery cells may be connected in parallel to form a battery module or a battery pack. Therefore, the number of battery cells included in the battery module or battery pack may be variously set according to the required output voltage or the charging and discharging capacity.

Meanwhile, as a type of unit secondary battery, cylindrical, prismatic, and pouch-type batteries are known. In the case of the battery, a separator that is an insulator is interposed between a positive electrode and a negative electrode, which are then wound to form a jelly roll-type electrode assembly, and this assembly is inserted into the battery housing to form a battery. And, a strip-shaped electrode tab may be connected to the respective uncoated portions of the positive electrode and the negative electrode, and the electrode tab electrically connects the electrode assembly and the electrode terminal exposed to the outside. For reference, the positive electrode terminal is a cap of a sealing body that seals the opening of the battery housing, and the negative electrode terminal is the battery housing. However, according to a conventional battery having such a structure, since the current is concentrated on the strip-shaped electrode tab connected to the positive electrode uncoated portion and/or the negative electrode uncoated portion, there was a problem in that the resistance is high, a lot of heat is generated, and the current collection efficiency is poor.

In small batteries with a form factor of 1865 or 2170, resistance and heat generation are not major issues. However, when increasing the form factor to apply the battery to electric vehicles, there may be a problem in which the battery is ignited due to the generation of a lot of heat around the electrode tab during the fast-charging process.

To solve this problem, a battery (so-called, tab-less battery) having a structure in which the positive electrode uncoated portion and the negative electrode uncoated portion are designed to be respectively positioned at the upper end and lower end of a jelly roll-type electrode assembly, and a current collector plate is welded to these uncoated portions to improve current collection efficiency was proposed.

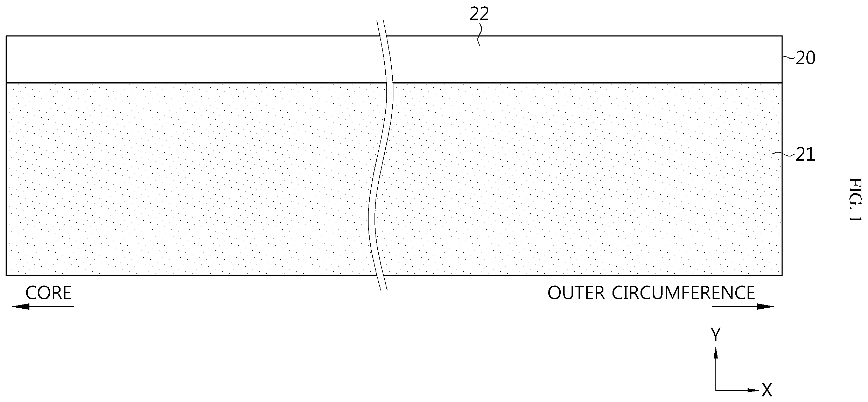

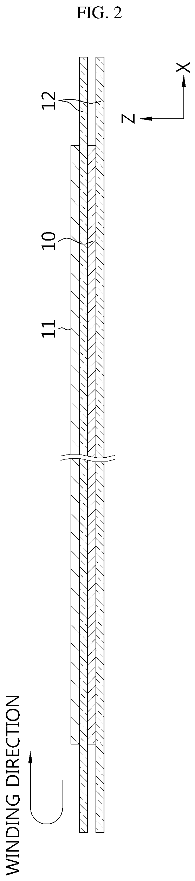

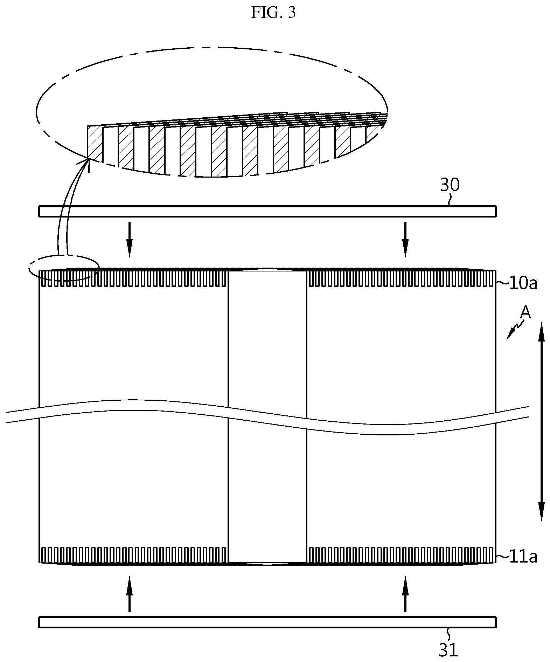

FIGS. 1 to 3 are views showing the manufacturing process of a tab-less battery. FIG. 1 shows the structure of an electrode, FIG. 2 shows the winding process of the electrode, and FIG. 3 shows the process of welding a current collector plate to the bent surface of an uncoated portion.

Referring to FIGS. 1 to 3, the positive electrode 10 and the negative electrode 11 have a structure in which an active material 21 is coated on a sheet-shaped current collector 20, and include an uncoated portion 22 on one long side along the winding direction X.

The electrode assembly A is manufactured by sequentially laminating the positive electrode 10 and the negative electrode 11 with two separators 12 as illustrated in FIG. 2, and then winding them in one direction X. At this time, the uncoated portions of the positive electrode 10 and the negative electrode 11 are disposed in opposite directions based on the short side direction of the separator 12. The positions of the positive electrode 10 and the negative electrode 11 may be changed in the opposite direction to those illustrated.

After the winding process, the uncoated portion 10a of the positive electrode 10 and the uncoated portion 11a of the negative electrode 11 are bent toward the core side. Thereafter, the current collector plates 30, 31 are respectively welded to the uncoated portions 10a, 11a to be welded.

Separate electrode tabs are not coupled to the positive electrode uncoated portion 10a and the negative electrode uncoated portion 11a, and the current collector plates 30, 31 are connected to external electrode terminals, and the current path is formed with a large cross-sectional area along the winding axis direction of the electrode assembly A (see arrow), so that there is an advantage of lowering the resistance of the battery. This is because the resistance is inversely proportional to the cross-sectional area of the path through which the current flows.

In a tab-less battery, in order to improve the welding characteristics of the uncoated portions 10a, 11a and the current collector plates 30, 31, strong pressure should be applied to the welding point of the uncoated portions 10a, 11a to bend the uncoated portions 10a, 11a as flat as possible.

When bending the uncoated portions 10a, 11a, a jig that presses the uncoated portions 10a, 11a toward the core of the electrode assembly A may be used.

When a bent surface is formed over the entire upper surface of the electrode assembly by bending the uncoated portions 10a, 11a, the electrolyte may not be smoothly injected, and furthermore, the gas generated therein may be blocked by the bent surface and difficult to be discharged to the outside.

### DISCLOSURE

### Technical Problem

The present disclosure is designed to solve the problems of the related art, and therefore the present disclosure is directed to providing a method and device for manufacturing an electrode including a winding turn portion having at least one opening for bending an uncoated portion of a tab-less battery, and an electrode assembly manufactured by the method and device.

The present disclosure is also directed to providing a battery including an electrode assembly manufactured by an improved method.

The present disclosure is still also directed to providing an electrode assembly that may improve energy density, reduce resistance, and improve electrolyte impregnation by including an electrode having a winding turn portion including at least one opening.

The present disclosure is still also directed to providing a battery including an electrode assembly with an improved structure, a battery pack including the same, and a vehicle including the battery pack.

Technical problems to be solved by the present disclosure are not limited to the above-described problems, and other problems not mentioned herein may be clearly understood by those having ordinary skill in the art from the following description of the present disclosure.

### Technical Solution

**In** order to solve the above problem, the present disclosure may provide an electrode assembly in which a positive electrode, a negative electrode, and a separator interposed therebetween are wound, wherein at least one of the positive electrode and the negative electrode includes an uncoated portion at a long side end, and a winding turn portion of the uncoated portion is provided at one end of the electrode assembly, wherein the winding turn portion includes a bending region including a plurality of uncoated portion layers configured to be bent by pressure to form a bent surface.

The bending region may include the bent surface and at least one opening configured to be surrounded by the bent surface.

The ratio of the area occupied by the at least one opening to the area of the bending region may be 30% or more and 50% or less.

The plurality of uncoated portion layers may be bent in plurality of times to overlap along the axial direction.

The bending region may be configured to be formed by pressure using a jig including at least one protrusion on one surface.

The bending region may correspond to a region pressed by the jig.

The at least one opening of the bending region may be configured to be formed in a region where the at least one protrusion of the jig is inserted.

The winding turn portion may further include a flat region that is not pressed by the jig.

The at least one opening may be configured to be formed in a region corresponding to the region where the separator is disposed.

The axial height of the bending region may be higher than the axial height of the flat region.

**In** order to solve the above problem, the present disclosure may provide a method for manufacturing an electrode assembly including a first step of preparing a positive electrode and a negative electrode having an uncoated portion at a long side end; a second step of forming an electrode-separator laminate by laminating the positive electrode, the negative electrode, and a separator at least once so that the separator is interposed between the positive electrode and the negative electrode, and by disposing the positive electrode and the negative electrode so that the positive electrode uncoated portion and the negative electrode uncoated portion are exposed in opposite directions along the short side direction of the separator; a third step of forming an electrode assembly by winding the electrode-separator laminate around one axis so that the winding turn portion of the positive electrode uncoated portion and the winding turn portion of the negative electrode uncoated portion are exposed in opposite directions along the axial direction; and a fourth step of pressing at least a part of the winding turn portion using a jig, and forming a bent surface and at least one opening configured to be surrounded by the bent surface by a plurality of uncoated portion layers bent by pressure.

When the plurality of uncoated portion layers are pressed using the jig in the fourth step, the bent surface may be formed and the at least one opening may be formed at the same time.

The jig may include at least one protrusion on one surface, and the at least one opening may be formed in a region where the at least one protrusion of the jig is inserted.

**In** order to solve the above problem, the present disclosure may provide a battery including an electrode assembly; a battery housing that includes an open end and a closed end opposite thereto, accommodates the electrode assembly through the open end, and is electrically connected to the electrode assembly; a sealing body that seals the open end of the battery housing; a terminal electrically connected to the electrode assembly and having a surface exposed to the outside; and a current collector plate welded to the bent surface and electrically connected to either the battery housing or the terminal.

Additionally, the present disclosure provides a battery pack including a battery according to the present disclosure.

And, the present disclosure provides a vehicle including a battery pack according to the present disclosure.

### Advantageous Effects

Since a plurality of uncoated portion layers according to an embodiment of the present disclosure are bent while overlapping along the axial direction, the electrolyte injection passage may not be shielded by the bent portion or the bent surface, and the electrolyte injection may be smoothly performed. Additionally, since the gas generated inside the cell during charging and discharging of the battery is not captured by the bent portion or the bent surface, smooth gas discharge may be induced.

According to one aspect of the present disclosure, a jig including at least one protrusion on one surface presses the winding turn portion of the uncoated portion from above, thereby bending a plurality of uncoated portion layers and forming at least one opening at the same time, and thus at least one opening may be utilized as an electrolyte injection passage to improve electrolyte impregnation.

According to another aspect of the present disclosure, the bending region of the winding turn portion of the uncoated portion may include at least one opening, thereby smoothly discharging gas generated inside the battery to the outside.

According to still another aspect of the present disclosure, by bending the bending region of the winding turn portion of the uncoated portion, a bent surface in which the plurality of uncoated portion layers overlap in multiple layers may be formed, and then a current collector plate may be welded to the corresponding region, thereby reducing the resistance of the battery.

In the manufacture of a conventional uncoated portion, a notching process was included to form a certain pattern in the uncoated portion, but the uncoated portion according to an embodiment of the present disclosure may be manufactured without a separate notching process. According to an embodiment of the present disclosure, it is possible to prevent performance degradation caused by metal foreign substances generated during the notching process and to induce smooth gas discharge. According to an embodiment of the present disclosure, the process time may be shortened and the process unit cost may be improved by omitting the notching process.

According to still another aspect of the present disclosure, by providing a large-capacity battery pack manufactured using batteries with high energy density and low resistance and a vehicle including the same, the safety of fast charging and the efficiency of energy use may be improved.

In addition, the present disclosure may have various other effects, which will be described in each embodiment, or descriptions of effects that may be easily inferred by those skilled in the art will be omitted.

### DESCRIPTION OF DRAWINGS

The accompanying drawings illustrate preferred embodiments of the present disclosure and together with the foregoing disclosure, serve to provide further understanding of the technical features of the present disclosure, and thus, the present disclosure is not construed as being limited to the drawing.
FIG. 1 is a plan view showing the structure of an electrode used in the manufacture of a conventional tab-less battery.
FIG. 2 is a view showing an electrode winding process of a conventional tab-less battery.
FIG. 3 shows a process of welding a current collector plate to a bent surface of an uncoated portion in a conventional tab-less battery.
FIG. 4 is a plan view showing the structure of an electrode according to an embodiment of the present disclosure.
FIG. 5 is a partial perspective view showing the upper structure of an electrode assembly before being pressed by a jig according to an embodiment of the present disclosure.
FIG. 6 is a cross-sectional view of a jelly roll-type electrode assembly in which the electrode of FIG. 5 according to an embodiment of the present disclosure is applied to the positive electrode and the negative electrode, taken along line A-A'.
FIG. 7 is a partial view of a jig and an electrode assembly used when pressing a winding turn portion along an axial direction according to an embodiment of the present disclosure, taken along the axial direction.
FIG. 8 is a partial view of a jig and an electrode assembly used when pressing a winding turn portion along an axial direction according to another embodiment of the present disclosure, taken along the axial direction.
FIG. 9 is an enlarged view showing a jig pressing a winding turn portion according to an embodiment of the present disclosure.
FIG. 10 is a plan view showing the pressure surface of a jig according to an embodiment of the present disclosure as viewed from below.
FIG. 11 is a diagram schematically showing a winding turn portion according to an embodiment of the present disclosure as viewed from above.
FIG. 12 is a plan view showing the pressure surface of a jig according to another embodiment of the present disclosure as viewed from below.
FIG. 13 is a diagram schematically showing a winding turn portion according to another embodiment of the present disclosure as viewed from above.
FIG. 14 is a cross-sectional view of a battery according to an embodiment of the present disclosure, taken along the axial direction Y.
FIG. 15 is a cross-sectional view of a battery according to another embodiment of the present disclosure, taken along the axial direction Y.
FIG. 16 is a view schematically showing the configuration of a battery pack according to an embodiment of the present disclosure.
FIG. 17 is a view for describing a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments described in this specification and the configurations shown in the drawings are only some of the most preferred embodiments of the present disclosure, not intended to entirely represent the technical aspects of the present disclosure, so it should be understood that various equivalents and modifications may be made thereto at the time of filing the present application.

Additionally, the present disclosure includes various embodiments. For each embodiment, duplicate descriptions of substantially identical or similar configurations will be omitted, and differences will be mainly described.

Additionally, to help understanding of the present disclosure, the accompanying drawings are not illustrated on an actual scale, but the dimensions of some components may be exaggerated. Additionally, the same reference numeral may be assigned to the same component in different embodiments.

Although the first, second, and the like are used to describe various components, it is obvious that these components are not limited by these terms. These terms are used only to distinguish one component from another component, and unless expressly stated to the contrary, it is obvious that the first component may be the second component.

Throughout the specification, unless expressly stated to the contrary, each component may be singular or plural.

Hereinafter, when any configuration is disposed on the "upper (or lower)" of a component or "top (or bottom)" of a component, it may mean not only that any configuration is disposed in contact with the upper surface (or lower surface) of the component, but also that other configuration may be interposed between the component and any configuration disposed above (or below) the component.

Additionally, when it is described that a component is "connected", "coupled", or "in contact" to another component, the components may be directly connected to or in contact with each other, but it should be understood that other components may be "interposed" between each component, or each component may be "connected", "coupled", or "in contact" through another component.

As used herein, singular expressions include plural expressions unless the context clearly indicates otherwise. In this application, the terms "comprising" or "including" should not be construed as necessarily including all of the various components or various steps described in the specification, but rather should be construed as not including some of the components or some of the steps, or as further including additional components or steps.

Throughout the specification, when referring to "A and/or B", it means A, B or A and B, unless expressly stated to the contrary, and when referring to "C to D", it means C or more and D or less, unless expressly stated to the contrary.

For convenience of description, the direction along the length direction of the winding axis of the electrode assembly wound in the form of a jelly roll is referred to as the axial direction Y in this specification. And, the direction surrounding the winding axis is referred to as the circumferential direction or the circumferential direction X. And, the direction closer to or away from the winding axis is referred to as the radial direction or the radial direction Z. Among these, in particular, the direction closer to the winding axis is referred to as the centripetal direction, and the direction away from the winding axis is referred to as the centrifugal direction.

First, an electrode assembly according to an embodiment of the present disclosure will be described. The electrode assembly is a jelly roll-type electrode assembly having a structure in which a positive electrode and a negative electrode having a sheet shape and a separator interposed therebetween are wound in one direction.

Preferably, at least one of the positive electrode and the negative electrode includes an uncoated portion in which an active material is not coated on the long side end in the winding direction. At least a part of the uncoated portion is used as an electrode tab in itself.

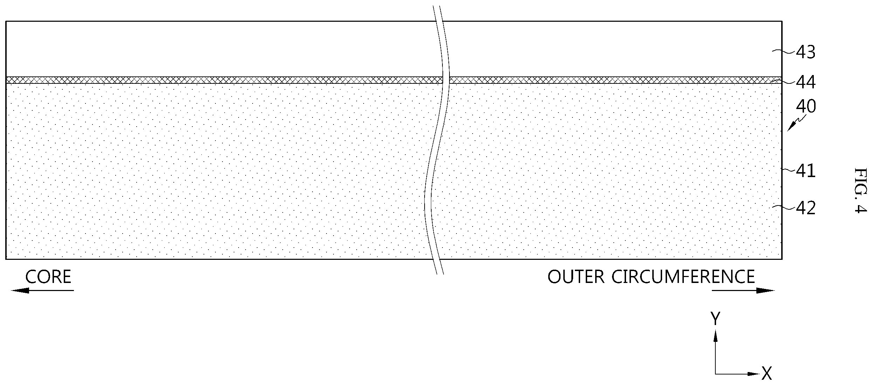

FIG. 4 is a plan view showing the structure of an electrode according to an embodiment of the present disclosure.

Referring to FIG. 4, an electrode 40 according to an embodiment of the present disclosure includes a current collector 41 and an active material layer 42. The configurations of the current collector 41, the active material layer 42, and the uncoated portion 43 of FIG. 4 may be the same as all or part of the configurations of the current collector 20, the active material layer 21, and the uncoated portion 22 of FIGS. 1 to 3. The embodiment of FIG. 4 may be partially combined with the element(s) illustrated in FIGS. 1 to 3.

**In** the electrode 40 according to an embodiment of the present disclosure, the current collector 41 may be formed of a metal foil. The metal foil may include a conductive metal. The metal foil may be aluminum or coper, and is appropriately selected according to the polarity of the electrode 40. The active material layer 42 is formed on at least one surface of the current collector 41, and the electrode plate 40 includes the uncoated portion 43 on the long side end in the winding direction X. The uncoated portion 43 is a region where the active material is not coated. An insulating coating layer 44 may be formed at a boundary between the active material layer 42 and the uncoated portion 43. At least a part of the insulating coating layer 44 is formed to overlap the boundary between the active material layer 42 and the uncoated portion 43. The insulating coating layer 44 may include a polymer resin, and may include an inorganic filler such as SiO₂ or Al₂O₃. The polymer resin may have a porous structure. The polymer resin is not particularly limited as long as it is an insulating material. Examples of the polymer resin may include polyolefin, polyimide, polyethylene terephthalate, polybutylene fluoride, and the like, but the present disclosure is not limited thereto.

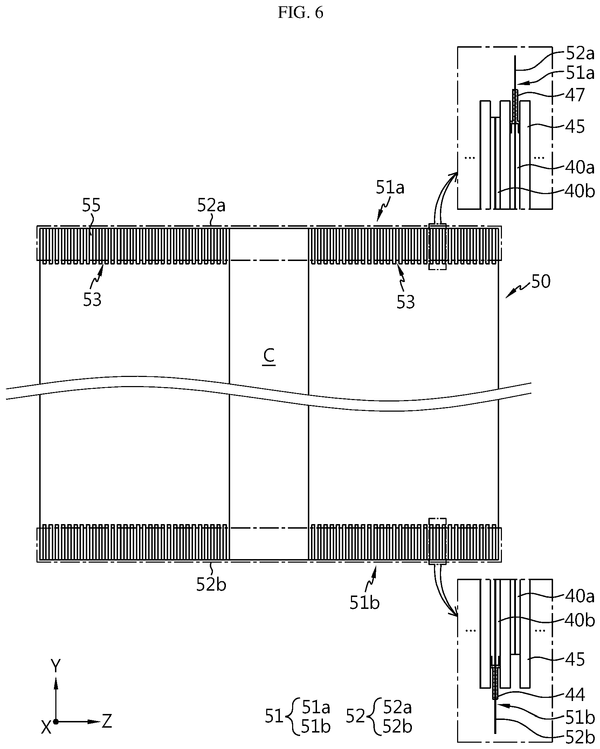

The electrode 40 of the above-described embodiment may be applied to the positive electrode (e.g., the positive electrode 40a of FIG. 6) and/or the negative electrode (e.g., the negative electrode 40b of FIG. 6) included in the jelly roll-type electrode assembly (e.g., the electrode assembly 50 of FIG. 6). Additionally, when the electrode structure of the embodiment is applied to any one of the positive electrode and the negative electrode, a conventional electrode structure (FIG. 1) may be applied to the other. Additionally, the electrode structures applied to the positive electrode and the negative electrode may not be the same but may be different from each other.

In the present disclosure, a positive electrode active material coated on the positive electrode and a negative electrode active material coated on the negative electrode may be used without limitation as long as they are active materials known in the art. In an example, the positive electrode active material may include an alkali metal compound expressed by a general chemical formula A[AₓM_{y}]O_{2+z} (A includes at least one of Li, Na, and K; M includes at least one element selected from Ni, Co, Mn, Ca, Mg, Al, Ti, Si, Fe, Mo, V, Zr, Zn, Cu, Al, Mo, Sc, Zr, Ru, and Cr; x ≥ 0, 1 ≤ x + y ≤ 2, -0.1 ≤ z ≤ 2; and stoichiometric coefficients x, y, and z are selected so that the compound maintains electrical neutrality).

In another example, the positive electrode active material may be an alkali metal compound xLiM1O₂₋(1-x)Li₂M2O₃ (M1 includes at least one element having an average oxide state of 3; M2 includes at least one element having an average oxidation state of 4; 0 ≤ x ≤ 1) disclosed in US6,677,082, US6,680,143, or the like.

In still another example, the positive electrode active material may be lithium metal phosphate expressed by a general chemical formula LiₐM1ₓFe₁₋ₓM2_{y}P_{1-y}M3_{z}O_{4-z} (M1 includes at least one element selected from Ti, Si, Mn, Co, Fe, V, Cr, Mo, Ni, Nd, Al, Mg, and Al; M2 includes at least one element selected from Ti, Si, Mn, Co, Fe, V, Cr, Mo, Ni, Nd, Al, Mg, Al, As, Sb, Si, Ge, V, and S; M3 includes an element of a halogen group selectively containing F; 0 < a ≤ 2, 0 ≤ x ≤ 1, 0 ≤ y < 1, 0 ≤ z < 1; and stoichiometric coefficients a, x, y, and z are selected so that the compound maintains electrical neutrality), or Li₃M₂(PO₄)₃ (M includes at least one element selected from Ti, Si, Mn, Fe, Co, V, Cr, Mo, Ni, Al, Mg, and Al).

Preferably, the positive electrode active material may include primary particles and/or secondary particles in which the primary particles are aggregated.

In an example, the negative electrode active material may use a carbon material, lithium metal or lithium metal compounds, silicon or silicon compounds, tin or tin compounds, or the like. Metal oxide such as TiO₂ or SnO₂ having a potential of less than 2 V may be used as the negative electrode active material. As the carbon material, low crystalline carbon and high crystalline carbon may all be used.

A separator may be a porous polymer film, which is made of, for example, a polyolefin-based polymer such as an ethylene homopolymer, a propylene homopolymer, an ethylene/butene copolymer, an ethylene/hexene copolymer, or an ethylene/methacrylate copolymer, either alone or in layers. In another example, the separator may be a common porous non-woven fabric, for example, a non-woven fabric made of glass fiber having a high melt point or polyethylene terephthalate fiber.

The uncoated portion 43 according to an embodiment of the present disclosure may be defined as a region in which at least one of the long side ends of the positive electrode and the negative electrode is not coated with an active material. In the manufacture of the conventional uncoated portion, a notching process for forming a certain pattern in the uncoated portion was included, but the uncoated portion 43 according to an embodiment of the present disclosure may be manufactured without a separate notching process. According to an embodiment of the present disclosure, it is possible to prevent performance degradation caused by metal foreign substances generated during the notching process and to induce smooth gas discharge. According to an embodiment of the present disclosure, the process time may be shortened and the process unit cost may be improved by omitting the notching process, thereby improving the current collection efficiency.

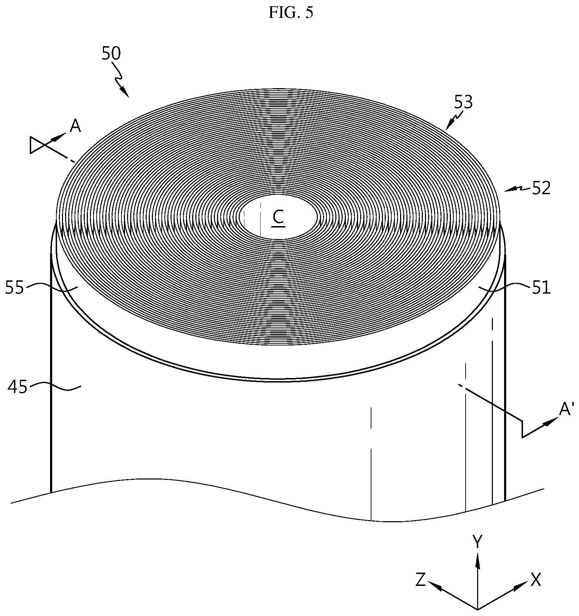

FIG. 5 is a partial perspective view showing the upper structure of an electrode assembly before being pressed by a jig according to an embodiment of the present disclosure. FIG. 6 is a cross-sectional view of a jelly roll-type electrode assembly in which the electrode of FIG. 5 according to an embodiment of the present disclosure is applied to the positive electrode and the negative electrode, taken along line A-A'.

Referring to FIGS. 5 and 6, an electrode assembly 50 according to an embodiment of the present disclosure may include an uncoated portion 51 that at least one of the positive electrode and the negative electrode includes. The configuration of the uncoated portion 51 of FIGS. 5 and 6 may be the same as all or part of the configuration of the uncoated portion 43 of FIG. 4. The embodiment of FIGS. 5 and 6 may be partially combined with the embodiment of FIG. 4.

The electrode assembly 50 may be defined as an assembly in which a positive electrode 40a, a negative electrode 40b, and a separator 45 interposed therebetween are wound. The electrode assembly 50 may be manufactured by the winding method described with reference to FIG. 2.

For example, the positive electrode 40a may include a current collector (e.g. a current collector 41 of FIG. 4) and an active material coating layer (e.g., an active material layer 42 of FIG. 4) formed on at least one surface thereof, and the thickness of the current collector may be approximately 180 um to 220 um. The negative electrode 40b may include a current collector (e.g. a current collector 41 of FIG. 4) and an active material coating layer (e.g., an active material layer 42 of FIG. 4) formed on at least one surface thereof, and the thickness of the current collector may be 140 um to 180 um. The separator 45 is interposed between the positive electrode 40a and the negative electrode 40b, and may have a thickness ranging from approximately 8 um to 18 um. For example, the length of the active material layer of the positive electrode 40a in the Y-axis direction may be shorter than the length of the active material layer of the negative electrode 40b in the Y-axis direction. Therefore, the active material layer of the negative electrode 40b may extend longer than the active material layer of the positive electrode 40a along the Y-axis direction. For example, in the electrode assembly 50, the number of winding turns of the positive electrode 40a varies depending on the form factor of the battery and may be approximately 48 to 56. The number of winding turns of the negative electrode 40b also varies depending on the form factor of the battery and may be approximately 48 to 56.

The separator 45 may be interposed between the positive electrode 40a and the negative electrode 40b. At least one surface of the separator 45 may include a coating layer of inorganic particles. Additionally, the separator 45 itself may be formed of a coating layer of inorganic particles. The particles constituting the coating layer may have a structure in which they are coupled to a binder so that an interstitial volume exists between adjacent particles. For example, the inorganic particles may be formed of an inorganic material having a dielectric constant of 5 or more. As a non-limiting example, the inorganic particles may include at least one material selected from the group consisting of Pb(Zr, Ti)O₃ (PZT), Pb₁₋ₓLaₓZr_{1-y}Ti_{y}O₃ (PLZT), PB(Mg₃Nb_{2/3})O₃-PbTiO₃ (PMN-PT), BaTiO₃, hafnia (HfO₂), SrTiO₃, TiO₂, Al₂O₃, ZrO₂, SnO₂, CeO₂, MgO, CaO, ZnO, and Y₂O₃.

At least one of the positive electrode 40a and the negative electrode 40b of the electrode assembly 50 may include an uncoated portion 51 at a long side end. The uncoated portion 51 may include a positive electrode uncoated portion 51a extending from the positive electrode 40a, and a negative electrode uncoated portion 51b extending from the negative electrode 40b. For example, the positive uncoated portion 51a may protrude in an upward direction of the electrode assembly 50 (e.g., the +Y-axis direction of FIG. 5), and the negative uncoated portion 51b may protrude in a downward direction of the electrode assembly 50 (e.g., the -Y-axis direction of FIG. 5).

For example, in the winding structure of the positive electrode 40a, the spacing between the positive electrode uncoated portions 51a positioned at radially adjacent winding turns may be approximately 350 um to 380 um. Additionally, in the winding structure of the negative electrode 40b, the spacing between the negative electrode uncoated portions 51b positioned at radially adjacent winding turns may be 350 um to 380 um.

The uncoated portion 51 may be formed longer than the uncoated portion applied to the design of a small battery. Preferably, the uncoated portion 51 may be 6 mm or longer, optionally 7 mm or longer, optionally 8 mm or longer, optionally 9 mm or longer, optionally 10 mm or longer, optionally 11 mm or longer, and optionally 12 mm or longer.

Preferably, the insulating coating layer 44 formed at the boundary between the active material layer (e.g., the active material layer 42 of FIG. 4) of the positive electrode 40a and the negative electrode 40b and the uncoated portion 51 may extend to the end of the separator 45 or be exposed to the outside from the end. When the insulating coating layer 44 is exposed to the outside of the separator 45, it may serve to support the bending point when the uncoated portion 51 is bent. When the bending point is supported, the stress applied to the active material layer 42 and the separator 45 when the uncoated portion 51 is bent is relieved. Additionally, the insulating coating layer 44 may prevent the positive electrode 40a and the negative electrode 40b from contacting each other and causing a short circuit.

A winding turn portion 52 of the uncoated portion 51 may be provided at one end of the electrode assembly 50. The winding turn portion 52 may refer to a portion formed when the uncoated portion 51 is wound. The winding turn portion 52 is exposed to the outside of the separator 45 along the axial direction Y. A positive electrode winding turn portion 52a formed when the positive electrode uncoated portion 51a is wound may be provided at the upper part of the electrode assembly 50. Similarly, a negative electrode winding turn portion 52b formed when the negative electrode uncoated portion 51b is wound may be provided at the lower part of the electrode assembly 50.

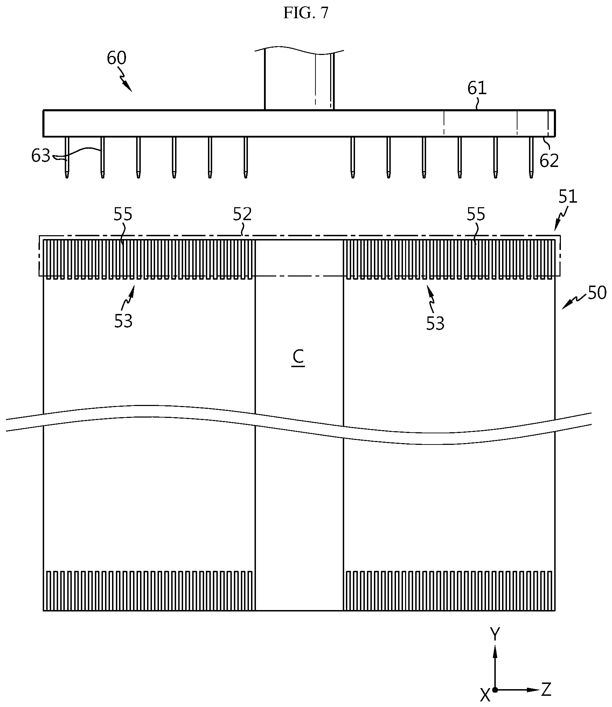

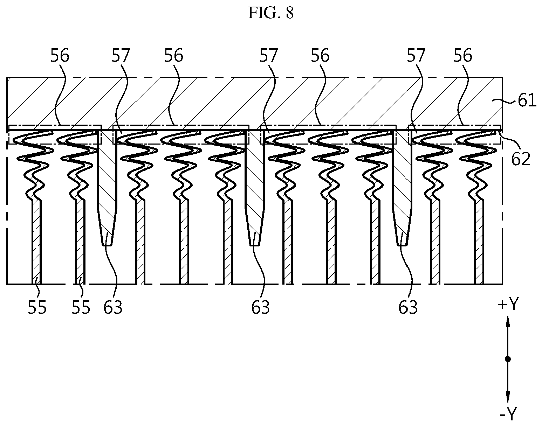

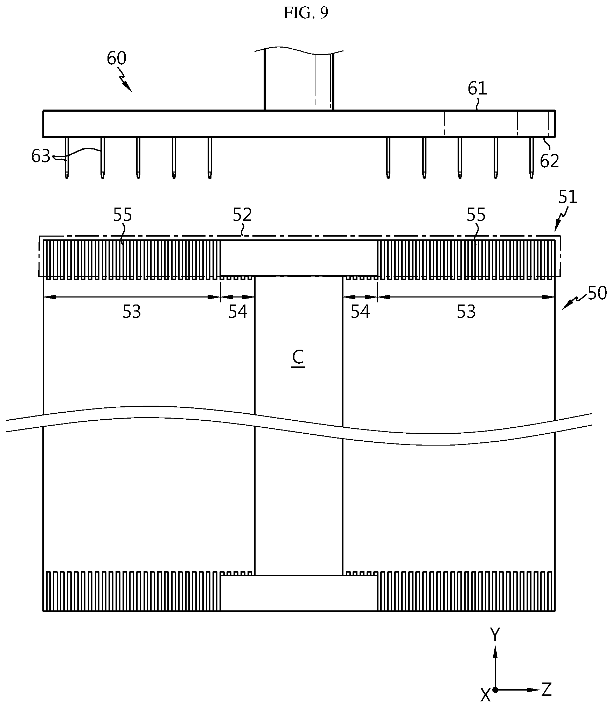

FIG. 7 is a partial view of a jig 60 and an electrode assembly 50 used when pressing a winding turn portion 52 along the axial direction Y according to an embodiment of the present disclosure, taken along the axial direction. FIG. 8 is a partial view of a jig 60 and an electrode assembly 50 used when pressing a winding turn portion 52 along the axial direction Y according to another embodiment of the present disclosure, taken along the axial direction. FIG. 9 is an enlarged view showing a jig 60 pressing a winding turn portion 52 according to an embodiment of the present disclosure.

Referring to FIGS. 7 to 9, an electrode assembly 50 according to an embodiment of the present disclosure may include an uncoated portion 51 that at least one of the positive electrode and the negative electrode includes. The configuration of the uncoated portion 51 of FIGS. 7 to 9 may be the same as all or part of the configuration of the uncoated portion 51 of FIGS. 5 and 6. The embodiment of FIGS. 7 to 9 may be partially combined with the embodiment of FIGS. 5 and 6.

According to an embodiment, referring to FIG. 7, the winding turn portion 52 may include a bending region 53 that is pressed by the jig 60. According to another embodiment, referring to FIG. 8, the winding turn portion 52 may further include a flat region 54 that is not pressed by the jig 60 as a region excluding the bending region 53. The shape and/or size of the bending region 53 may substantially correspond to the shape and/or size of the pressure surface 62 of the jig 60. The arrangement and ratio of the bending region 53 and the flat region 54 may be variously designed and changed according to the embodiments. Meanwhile, the flat region 54 may be a region in which the length of the uncoated portion 51 is formed shorter than that of the surroundings by removing a part or all of the uncoated portion 51 as illustrated in the drawings of the present disclosure. However, the present disclosure is not limited thereto, and the length of the uncoated portion 51 in the flat region 54 may be formed to be substantially the same as the length of the uncoated portion 51 near the flat region 54 (length before bending). In this case, the jig 60 may be configured not to press the region corresponding to the flat region 54.

According to an embodiment, the bending region 53 may include a plurality of uncoated portion layers 55 arranged along the radial direction Z. The plurality of uncoated portion layers 55 may be defined as ends of the wound uncoated portions protruding in an upward direction (e.g., the +Y-axis direction of FIG. 7). The plurality of uncoated portion layers 55 may have a width in the radial direction Z that is substantially the same from the core C side of the electrode assembly 50 to the outer circumferential surface side. Alternatively, the plurality of uncoated portion layers 55 may have a circumferential width that gradually increases from the core side of the electrode assembly 50 to the outer circumferential surface side.

The plurality of uncoated portion layers 55 may be configured to be bent by pressure. The plurality of uncoated portion layers 55 may be configured to be bent in plurality of times by pressure. The plurality of uncoated portion layers 55 may be pressed from the upper side to the lower side along the axial direction Y (e.g., the -Y-axis direction of FIG. 7). The plurality of uncoated portion layers 55 may be bent in plurality of times while overlapping along the axial direction Y. The plurality of uncoated portion layers 55 may be bent irregularly. For example, the bending shape of the plurality of uncoated portion layers 55 may be a wavy shape. For example, the bending shape of the plurality of uncoated portion layers 55 may be an irregular zigzag shape.

Since the plurality of uncoated portion layers 55 according to an embodiment of the present disclosure are bent while overlapping along the axial direction Y, the electrolyte injection passage may not be shielded by the bent portion or the bent surface 56. Additionally, since the gas generated inside the cell during charging and discharging of the battery is not captured by the bent portion or the bent surface 56, smooth gas discharge may be induced.

Since the plurality of uncoated portion layers 55 according to an embodiment of the present disclosure are bent while overlapping along the axial direction Y, the core C of the electrode assembly 50 may not be shielded even if bent. Since the electrode assembly 50 does not shield the core C, the electrolyte injection passage is not shielded, and the electrolyte injection may be performed smoothly.

According to an embodiment, the bending region 53 may include a bent surface 56 formed by bending a plurality of uncoated portion layers 55 by pressure, and at least one opening 57 configured to be surrounded by the bent surface 56.

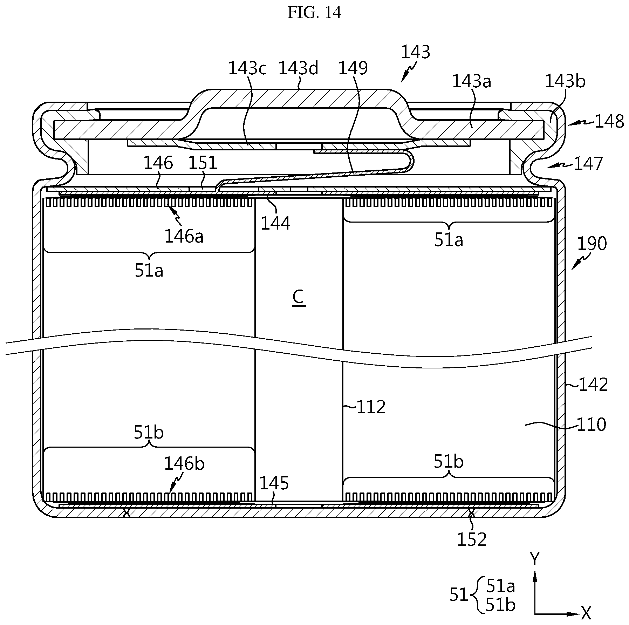

The plurality of uncoated portion layers 55 may be bent a plurality of times while overlapping along the axial direction Y to form a flat bent surface 56 that is substantially perpendicular to the axial direction Y. The bent surface 56 may be a substantially flat surface facing an upper direction (e.g., the +Y-axis direction of FIG. 7) formed by the plurality of uncoated portion layers 55. The bent surface 56 may be used as a welding area of a current collector plate (e.g., the first current collector plate 144 of FIG. 14. The bent surface 56 may include a region where the plurality of uncoated portion layers 55 overlap in multiple layers along the axial direction Y to achieve sufficient welding strength.

According to an embodiment, a jig 60 including at least one protrusion 63 on one surface may press the bending region 53 from above, thereby bending a plurality of uncoated portion layers 55 and forming at least one opening 57 at the same time.

At least one opening 57 formed in the bending region 53 may be utilized as an electrolyte injection passage. In other words, electrolyte injection may be performed smoothly by forming at least one opening 57 in the bending region 53. Additionally, at least one opening 57 formed in the bending region 53 may be utilized as a passage through which gas generated inside the battery may be discharged to the outside.

The bending region 53 may substantially correspond to the shape and/or size of the pressure surface 62 of the jig 60. According to an embodiment, at least one opening 57 may be formed in a region corresponding to a position where at least one protrusion 63 is formed in the jig 60.

According to an embodiment, the jig 60 may include a pressure portion 61 and a grip portion extending in an upward direction (+Y-axis direction) from the pressure portion 61. The pressure portion 61 may include a pressure surface 62 that is a surface facing a downward direction (-Y-axis direction). The pressure surface 62 may be a surface that directly faces a pressure target and presses the pressure target. For example, the pressure surface 62 may be positioned above the electrode assembly 50 and configured to press the winding turn portion 52 of the electrode assembly 50 in a direction from the upper side to the lower side. For example, the pressure surface 62 may face the winding turn portion 52 substantially in parallel. The grip portion may be a portion in contact with the user's body. The shape and/or structure of the pressure portion 61 and the grip portion may be variously designed and changed.

According to an embodiment, the jig 60 may include at least one protrusion 63 protruding vertically from the pressure surface 62. According to an embodiment, the at least one protrusion 63 may be formed to protrude in a downward direction (e.g., the -Y-axis direction of FIG. 7) from the pressure surface 62 of the jig 60.

According to an embodiment, the at least one protrusion 63 may be formed at a portion of the pressure surface 62 facing the bending region 53. For example, the at least one protrusion 63 may not be disposed on the pressure surface 62 corresponding to the core C region of the electrode assembly 50. For example, referring to FIG. 8, the at least one protrusion 63 may not be disposed on the pressure surface 62 corresponding to the flat region 54.

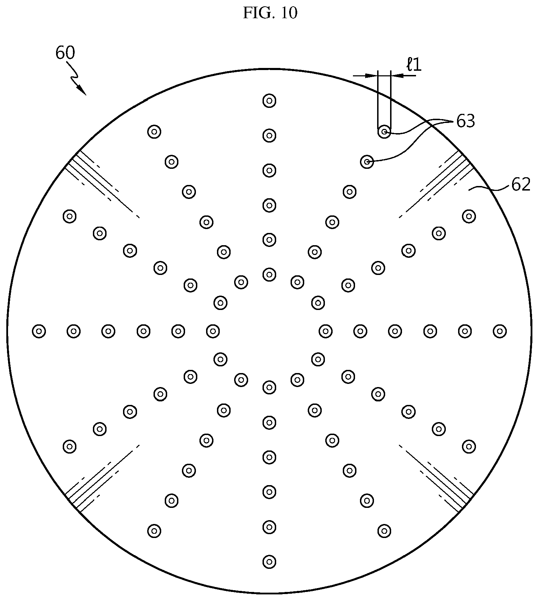

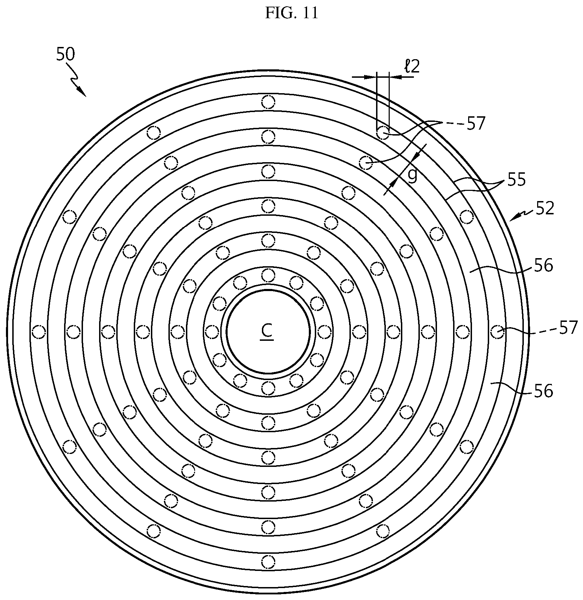

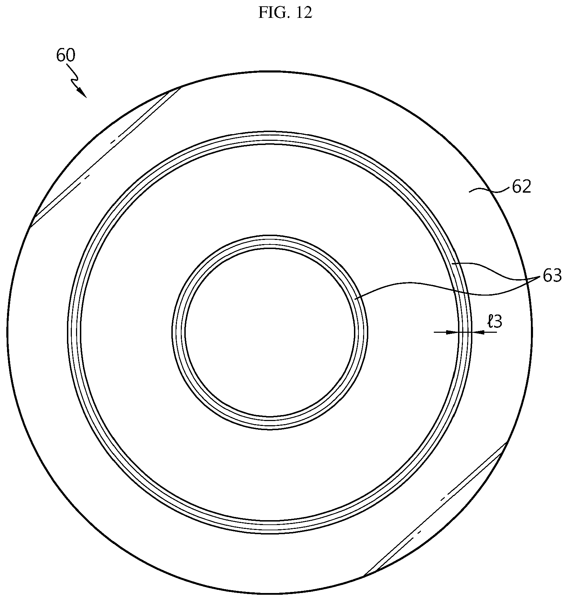

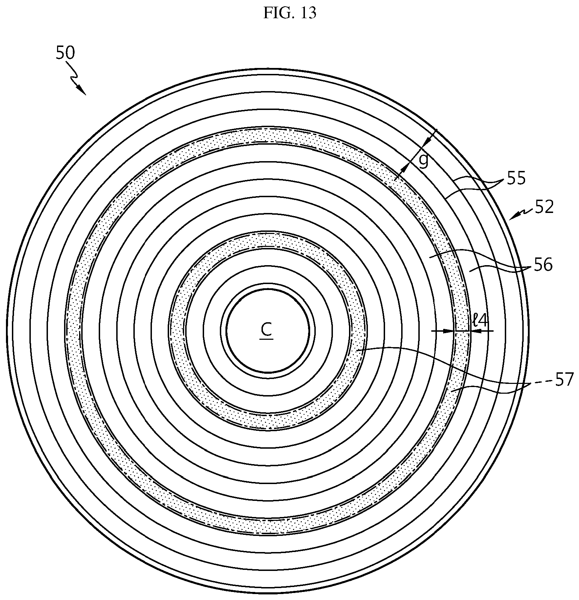

FIG. 10 is a plan view showing the pressure surface of a jig 60 according to an embodiment of the present disclosure as viewed from below. FIG. 11 is a diagram schematically showing a winding turn portion 52 according to an embodiment of the present disclosure as viewed from above. FIG. 12 is a plan view showing the pressure surface of a jig 60 according to another embodiment of the present disclosure as viewed from below. FIG. 13 is a diagram schematically showing a winding turn portion 52 according to another embodiment of the present disclosure as viewed from above.

Referring to FIGS. 10 to 13, an electrode assembly 50 and a jig 60 according to an embodiment of the present disclosure will be described. The configurations of the electrode assembly 50 and the jig 60 of FIGS. 10 to 13 may be the same as all or part of the configurations of the electrode assembly 50 and the jig 60 of FIGS. 7 to 9. The embodiment of FIGS. 10 to 13 may be partially combined with the embodiment of FIGS. 7 to 9.

According to an embodiment, the ratio of the area occupied by the at least one opening 57 to the area of the bending region 53 may be approximately 30% or more. For example, the ratio of the area occupied by the at least one opening 57 to the area of the bending region 53 (hereinafter, defined as the 'opening ratio') may be approximately 30% or more and 50% or less. For example, when the opening ratio is lower than 30%, the opening may not function smoothly as an electrolyte injection passage and/or an internal gas discharge passage. For example, when the opening ratio is higher than 50%, the welding area with the current collector plate may be reduced, and thus welding with the current collector plate may be difficult. However, the ratio of the area occupied by the at least one opening 57 to the area of the bending region 53 is not limited by the above embodiment, and may be variously designed and changed.

According to an embodiment, at least one protrusion 63 may be formed at a position corresponding to a space between a plurality of uncoated portion layers 55. In other words, at least one projection 63 may be configured to be inserted between the plurality of uncoated portion layers 55.

According to an embodiment, at least one protrusion 63 formed on the jig 60 may be inserted between the plurality of uncoated portion layers 55 to form at least one opening 57 between the bent surfaces 56. In the present disclosure, the uncoated portion 51 (see FIG. 8) may be pressed by the jig 60 and bent irregularly without going through a process such as notching for smooth bending. In this way, the uncoated portion layers 55 may overlap each other in the process of bending the uncoated portion 51, and accordingly, a space through which the electrolyte may pass may not be formed on the bent surface of the uncoated portion 51. However, in the present disclosure, the opening 57 surrounded by the uncoated portion layers 55 may be formed by applying pressure for forming the bent surface while securing a space using the protrusion 63 provided on the jig 60. At least one opening 57 may be formed at a position corresponding to the space between the plurality of uncoated portion layers 55.

According to an embodiment, the size of at least one protrusion 63 may be substantially equal to or smaller than the width (g) in the radial direction Z between the plurality of uncoated portion layers 55. For example, referring to FIG. 10, the diameter 11 of at least one protrusion 63 may be substantially equal to or smaller than the width (g) in the radial direction Z between the plurality of uncoated portion layers 55.

Similarly, the size of at least one opening 57 may be substantially equal to or smaller than the width (g) in the radial direction Z between the plurality of uncoated portion layers 55. For example, referring to FIG. 11, the diameter 12 of at least one opening 57 may be substantially equal to or smaller than the width (g) in the radial direction Z between the plurality of uncoated portion layers 55.

According to an embodiment, at least one protrusion 63 may be one or in plurality. At least one protrusion 63 may be a plurality of protrusions disposed in a regular pattern. For example, referring to FIG. 10, at least one protrusion 63 may include a plurality of protrusions disposed at regular intervals along the circumferential direction X. For example, at least one protrusion 63 may include a plurality of protrusions disposed at regular intervals along the radial direction Z. According to an embodiment, at least one protrusion 63 may be formed to extend in the circumferential direction X along the space between the plurality of uncoated portion layers 55.

For example, referring to FIG. 10, at least one protrusion 63 may include a plurality of protrusions disposed to be spaced apart sequentially at regular intervals along the circumferential direction X from the central portion of the pressure surface 62 in an outward direction. Similarly, referring to FIG. 11, at least one opening 57 may include a plurality of openings 57 disposed to be spaced apart sequentially at regular intervals along the circumferential direction X from the core portion C of the bending region 53 in an outward direction.

For example, referring to FIG. 12, at least one protrusion 63 may include a protrusion 63 having a curved surface extending along the circumferential direction X of the pressure surface 62. In this way, a plurality of protrusions having a curved surface extending along the circumferential direction X may be disposed sequentially from the central portion of the pressure surface 62 in an outward direction. Similarly, referring to FIG. 13, at least one opening 57 may include an opening 57 having a curved surface extending along the circumferential direction X of the bending region 53. In this way, a plurality of openings having a curved surface extending along the circumferential direction X may be disposed sequentially from the central portion of the bending region 53 in an outward direction.

The electrode assembly 50 according to an embodiment of the present disclosure may be applied to a jelly roll-type battery.

Preferably, the battery may be, for example, a battery whose form factor ratio (defined as a value obtained by dividing a diameter of the battery by a height, that is, a ratio of the diameter Φ to the height H) is greater than about 0.4.

Here, the form factor means a value indicating the diameter and height of the battery. The battery according to an embodiment of the present disclosure may be, for example, a 46110 battery, a 4875 battery, a 48110 battery, a 4880 battery, or a 4680 battery. In the numerical value indicating the form factor, the first two digits indicate the diameter of the battery, and the remaining digits indicate the height of the battery.

When applying an electrode assembly having a tab-less structure to a battery whose form factor ratio exceeds 0.4, the stress applied in a radial direction when an uncoated portion is bent is large, and thus the uncoated portion is easily torn. Additionally, in order to secure sufficient welding strength and reduce resistance when welding the current collector plate to a bent surface 56 region of the uncoated portion 51, the number of overlapping layers of the uncoated portions should be sufficiently increased. Such a requirement may be achieved by the electrode and electrode assembly 50 according to embodiments (modified examples) of the present disclosure.

A battery according to an embodiment of the present disclosure may be a battery in a roughly cylindrical shape, having a diameter of about 46 mm, a height of about 110 mm, and a form factor ratio of 0.418.

A battery according to another embodiment may be a battery in a roughly cylindrical shape, having a diameter of about 48 mm, a height of about 75 mm, and a form factor ratio of 0.640.

A battery according to still another embodiment may be a battery in a roughly cylindrical shape, having a diameter of about 48 mm, a height of about 110 mm, and a form factor ratio of 0.436.

A battery according to still another embodiment may be a battery in a roughly cylindrical shape, having a diameter of about 48 mm, a height of about 80 mm, and a form factor ratio of 0.600.

A battery according to still another embodiment may be a battery in a roughly cylindrical shape, having a diameter of about 46 mm, a height of about 80 mm, and a form factor ratio of 0.575.

Conventionally, batteries having a form factor ratio of about 0.4 or less have been used. That is, conventionally, for example, a 1865 battery, a 2170 battery, or the like have been used. The 1865 battery has a diameter of about 18 mm, a height of about 65 mm, and a form factor ratio of 0.277. The 2170 battery has a diameter of about 21 mm, a height of about 70 mm, and a form factor ratio of 0.300.

Hereinafter, a battery according to an embodiment of the present disclosure will be described in detail.

FIG. 14 is a cross-sectional view of a battery according to an embodiment of the present disclosure, taken along the axial direction Y.

Referring to FIG. 14, a battery 190 according to an embodiment of the present disclosure includes an electrode assembly 110 that includes a positive electrode, a separator, and a negative electrode wound in the form of a jelly roll; a battery housing 142 that accommodates the electrode assembly 110; and a sealing body 143 that seals an open end of the battery housing 142. The electrode assembly 110 has the structure of the above-described embodiment. The configuration of the electrode assembly 110 of FIG. 14 may be the same as all or part of the configuration of the electrode assembly 50 of FIGS. 10 to 13. The embodiment of FIG. 14 may be partially combined with the embodiment of FIGS. 10 to 13.

The battery housing 142 is a cylindrical container with an opening formed at the top. The battery housing 142 is made of a conductive metal material such as aluminum, steel, stainless steel, or the like. The battery housing 142 accommodates an electrode assembly 110 in an inner space through the upper end opening, and also accommodates an electrolyte. A Ni coating layer may be formed on the outer surface and/or inner surface of the battery housing 142.

The electrolyte may be a salt having a structure such as A⁺B⁻⁻. Here, A⁺ includes an alkali metal cation such as Li⁺, Na⁺, or K⁺ or a combination thereof. And, B⁻⁻ includes one or more anions selected from the group consisting of Fⁿ, Cl⁻⁻, Br⁻⁻, I⁻⁻, NO₃⁻⁻, N(CN)₂⁻⁻, BF₄⁻⁻, ClO₄⁻⁻, AlO₄⁻⁻, AlCl₄⁻⁻, PF₆⁻⁻, SbF₆⁻⁻, AsF₆⁻⁻, BF₂C₂O₄⁻⁻, BC₄O_{3~}, (CF₃)₂PF₄⁻⁻, (CF₃)₃PF₃⁻⁻, (CF₃)₄PF₂⁻⁻, (CF₃)₅PF⁻⁻, (CF₃)₆P⁻⁻, CF₃SO₃⁻⁻, C₄F₉SO₃⁻⁻, CF₃CF₂SO₃⁻⁻, (CF₃SO₂)₂N⁻⁻, (FSO₂)₂N⁻⁻, CF₃CF₂(CF₃)₂CO⁻⁻, (CF₃SO₂)₂CH⁻⁻, (SF₅)₃C⁻⁻, (CF₃SO₂)₃C⁻⁻, CF₃(CF₂)₇SO₃⁻⁻, CF₃CO₂⁻⁻, CH₃CO₂⁻⁻, SCN⁻⁻, and (CF₃CF₂SO₂)₂N⁻⁻.

The electrolyte may also be used by dissolving it in an organic solvent. Examples of the organic solvent may include propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, and a mixture thereof.

The electrode assembly 110 may have a jelly roll shape. As illustrated in FIG. 2, the electrode assembly 110 may be manufactured by winding an electrode-separator laminate formed by sequentially laminating a lower separator, a positive electrode, an upper separator, and a negative electrode at least once, around the winding center C.

A positive electrode uncoated portion 51a and a negative electrode uncoated portion 51b may each protrude from the upper part and the lower part of the electrode assembly 110. The positive electrode uncoated portion 51a may form a positive electrode winding turn portion (e.g., the positive electrode winding turn portion 52a of FIG. 6) at the upper part of the electrode assembly 110, and the negative electrode uncoated portion 51b may form a negative electrode winding turn portion (e.g., the negative electrode winding turn portion 52b of FIG. 6) at the lower part of the electrode assembly 110.

The sealing body 143 may include a cap 143a, a sealing gasket 143b that provides airtightness between the cap 143a and the battery housing 142 and has insulating properties, and a connection plate 143c that is electrically and mechanically coupled to the cap 143a.

The cap 143a may include a conductive metal material. The cap 143a may cover the upper end opening of the battery housing 142. The cap 143a may be electrically connected to the positive electrode winding turn portion 52a and may be electrically insulated from the battery housing 142 through the sealing gasket 143b. Therefore, the cap 143a may function as a positive electrode terminal of the battery 140.

The cap 143a may be seated on a beading portion 147 formed in the battery housing 142 and may be fixed by a crimping portion 148. The sealing gasket 143b may be interposed between the cap 143a and the crimping portion 148 to secure the airtightness of the battery housing 142 and to provide electrical insulation between the battery housing 142 and the cap 143a. The cap 143a may have a protrusion 143d formed to protrude upward from the center thereof.

The battery housing 142 may be electrically connected to the negative electrode winding turn portion 52b. Therefore, the battery housing 142 may have the same polarity as the negative electrode.

The battery housing 142 may have a beading portion 147 and a crimping portion 148 at the upper end thereof. The beading portion 147 may be formed by pressing the circumference of an outer circumferential surface of the battery housing 142. The beading portion 147 may prevent the electrode assembly 110 accommodated inside the battery housing 142 from escaping through the upper end opening of the battery housing 142, and may function as a support on which the sealing body 143 is seated.

The crimping portion 148 may be formed on the upper part of the beading portion 147. The crimping portion 148 may have an extending and bent shape to wrap around the outer circumferential surface of the cap 143a disposed on the beading portion 147 and a part of the upper surface of the cap 143a.

The battery 190 may further include a first current collector plate 144 and/or a second current collector plate 145 and/or an insulator 146.

The first current collector plate 144 may be coupled to the upper part of the electrode assembly 110. The first current collector plate 144 may include a conductive metal material such as aluminum, copper, nickel, or the like.

The first current collector plate 144 may be welded to a welding target area of a bent surface 56 formed by bending a plurality of uncoated portion layers 55 in the bending region 53 of the positive electrode winding turn portion 52a. For example, the welding target area may be an area where the average number of bending of the plurality of uncoated portion layers 55 of the electrode assembly 110 is five or more. Additionally, the welding target area may be an area where the average stacking thickness of the plurality of uncoated portion layers 55 is 50 µm or more.

According to an embodiment, at least one hole (not shown) may be formed at the center of the first current collector plate 144. The electrolyte may be injected through the hole. According to an embodiment, the diameter of the hole may be at least 0.5 times the diameter of the cavity in the core of the electrode assembly 110. If the diameter of the hole is smaller than the diameter of the cavity in the core, the electrode or separator may be prevented from escaping through the cavity in the core when venting occurs in the battery 190. Additionally, if the diameter of the hole is equal to or larger than the diameter of the cavity in the core, the welding jig may be easily inserted during the process of welding the second current collector plate 145 to the bottom of the battery housing 142 and the electrolyte may be smoothly injected.

Although not illustrated in the drawings, the second current collector plate 145 may have a hole provided at a position corresponding to the opening 57 of the electrode assembly 50 described above. In this case, it is possible to secure a region where the electrolyte may circulate even in a region covered by the second current collector plate 145 among the entire region on one surface of the electrode assembly 50.

A lead portion 149 may extend upward from the electrode assembly 110 to be coupled to the connection plate 143c or may be directly coupled to the lower surface of the cap 143a. The connection plate 143c may be coupled to the lower surface of the cap 143a. The lead portion 149 and other parts may be coupled by welding.

The bent surface 56 formed by bending the plurality of uncoated portion layers 55 and the first current collector plate 144 may be coupled by laser welding. The laser welding may be replaced by resistance welding, ultrasonic welding, or the like.

A plate-shaped second current collector plate 145 may be coupled to the lower surface of the electrode assembly 110. The second current collector plate 145 may include a conductive metal material such as aluminum, copper, nickel, or the like. The second current collector plate 145 may be electrically connected to the battery housing 142. A first surface of the second current collector plate 145 may be coupled to the electrode assembly 110, and a second surface opposite to the first surface may be coupled to the battery housing 142.

The insulator 146 may cover the first current collector plate 144. The insulator 146 may prevent direct contact between the first current collector plate 144 and the inner circumferential surface of the battery housing 142 by covering the first current collector plate 144 on the upper surface of the first current collector plate 144.

The insulator 146 may have a lead hole 151 so that the lead portion 149 extending upward from the first current collector plate 144 may be drawn out. The lead portion 149 may be drawn out upward through the lead hole 151 and coupled to the lower surface of the connection plate 143c or the lower surface of the cap 143a.

The edge circumferential region of the insulator 146 may be interposed between the first current collector plate 144 and the beading portion 147 to fix a combination of the electrode assembly 110 and the first current collector plate 144. Accordingly, the combination of the electrode assembly 110 and the first current collector plate 144 may be restricted from moving in the axial direction Y, thereby improving the assembly stability of the battery 190.

The insulator 146 may be made of an insulating polymer resin. In an example, the insulator 146 may be made of polyethylene, polypropylene, polyimide, or polybutylene terephthalate.

The battery housing 142 may further have a vent portion 152 formed on the lower surface thereof. The vent portion 152 may correspond to a region of the lower surface of the battery housing 142 having a thinner thickness compared to the peripheral region. The vent portion 152 may be configured to be structurally weaker compared to the peripheral region. Therefore, when abnormality occurs in the battery 190 and internal pressure increases to a certain level or more, the vent portion 152 may rupture and the gas generated inside the battery housing 142 may be discharged to the outside.

The vent portion 152 may be formed continuously or discontinuously in a circle on the lower surface of the battery housing 142. In a modified example, the vent portion 152 may be formed in a linear pattern or other patterns.

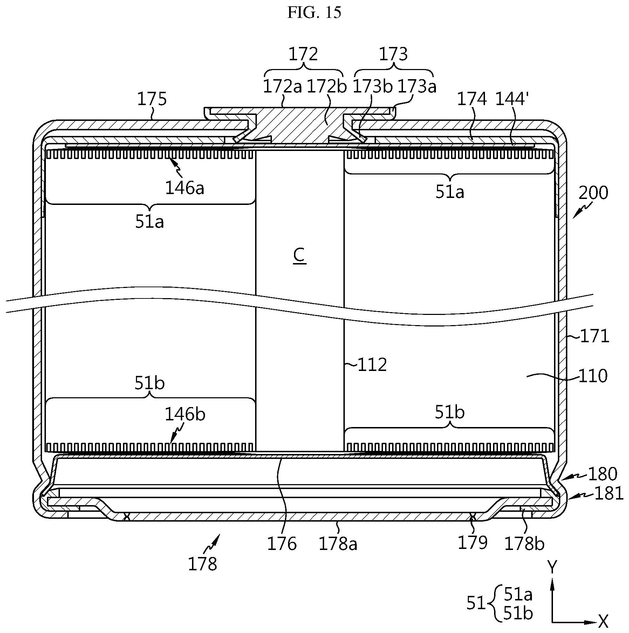

FIG. 15 is a cross-sectional view of a battery according to another embodiment of the present disclosure, taken along the axial direction Y.

Referring to FIG. 15, the battery 200 has substantially the same structure of the electrode assembly as the battery 190 illustrated in FIG. 14, and differs in that the remaining structure excluding the electrode assembly is changed.

Specifically, the battery 200 includes a battery housing 171 through which a terminal 172 is installed. The terminal 172 may be a rivet terminal in which an edge of one end is riveted to an inner surface of a closed portion of the battery housing 171. The terminal 172 is installed in the closed portion (upper part of the drawing) of the battery housing 171. The terminal 172 is riveted to the through hole of the battery housing 171 while an insulating gasket 173 is interposed therebetween. The terminal 172 is exposed to the outside in a direction opposite to the direction of gravity.

The terminal 172 may include a terminal exposure portion 172a and a terminal insertion portion 172b. The terminal exposure portion 172a may be exposed to the outside of the closed portion of the battery housing 171. The terminal exposure portion 172a may be positioned approximately at the center of the closed portion of the battery housing 171. The maximum diameter of the terminal exposure portion 172a may be formed larger than the maximum diameter of the through hole formed in the battery housing 171. The terminal insertion portion 172b may be electrically connected to the positive electrode winding turn portion 52a by penetrating the approximate center of the closed portion of the battery housing 171. The part where the electrical connection is made may be a bent surface 56 formed by bending a plurality of uncoated portion layers 55 of the positive electrode winding turn portion 52a. The terminal insertion portion 172b may be riveted onto the inner surface of the closed portion of the battery housing 171. That is, the end edge of the terminal insertion portion 172b may be pressed by a caulking jig to have a shape bent toward the inner surface of the battery housing 171. The maximum diameter of the end of the terminal insertion portion 172b may be larger than the maximum diameter of the through hole of the battery housing 171.

The lower end surface of the terminal insertion portion 172b is substantially flat and may be welded to the first current collector plate 144' connected to the bent portion of the positive electrode winding turn portion 52a.

The first current collector plate 144' may have substantially the same structure as the current collector plate 145 shown in FIG. 14.

An insulator 174 made of an insulating material may be interposed between the first current collector plate 144' and the inner surface of the battery housing 171. The insulator 174 may cover the upper part of the first current collector plate 144' and the upper end edge portion of the electrode assembly 110. This may prevent the first current collector plate 144' from contacting the inner surface of the battery housing 171 having a different polarity and causing a short circuit. Preferably, the terminal insertion portion 172b of the terminal 172 may be welded to the first current collector plate 144' by penetrating the insulator 174. The insulator 174 may include an insulating polymer resin.

The insulating gasket 173 may be configured to be interposed between the battery housing 171 and the terminal 172 to prevent the battery housing 171 and the terminal 172 having opposite polarities from electrically contacting each other. This may allow the upper surface of the battery housing 171 having a roughly flat shape to function as a negative electrode terminal of the battery 200.

The insulating gasket 173 may include a gasket exposure portion 173a and a gasket insertion portion 173b. The gasket exposure portion 173a may be interposed between the terminal exposure portion 172a of the terminal 172 and the battery housing 171. The gasket insertion portion 173b may be interposed between the terminal insertion portion 172b of the terminal 172 and the battery housing 171. The gasket insertion portion 173b may be deformed together during riveting of the terminal insertion portion 172b to be in close contact with the inner surface of the battery housing 171. The insulating gasket 173 may be made of, for example, an insulating polymer resin.

The gasket exposure portion 173a of the insulating gasket 173 may have an extending shape to cover the outer circumferential surface of the terminal exposure portion 172a of the terminal 172. When the insulating gasket 173 covers the outer circumferential surface of the terminal 172, it is possible to prevent a short circuit from occurring in the process of coupling electrical connection components such as bus bars to the upper surface of the battery housing 171 and/or the terminal 172. Although not illustrated in the drawings, the gasket exposure portion 173a may have an extending shape to cover not only the outer circumferential surface of the terminal exposure portion 172a but also a part of the upper surface.

When the insulating gasket 173 is made of a polymer resin, the insulating gasket 173 may be coupled to the battery housing 171 and the terminal 172 by thermal fusion. In this case, airtightness at the bonding interface between the insulating gasket 173 and the terminal 172 and at the bonding interface between the insulating gasket 173 and the battery housing 171 may be enhanced. Meanwhile, when the gasket exposure portion 173a of the insulating gasket 173 has a form extending to the upper surface of the terminal exposure portion 172a, the terminal 172 may be integrally coupled to the insulating gasket 173 by insert injection.

The remaining region 175 of the upper surface of the battery housing 171 that excludes the region occupied by the terminal 172 and the insulating gasket 173 may correspond to an electrode terminal having the opposite polarity to the terminal 172.

The second current collector plate 176 may be coupled to the lower part of the electrode assembly 110. The second current collector plate 176 may include a conductive metal material such as aluminum, steel, copper, nickel, or the like. The second current collector plate 176 may be coupled to a welding target area of a bent surface 56 formed in the negative electrode winding turn portion 52b by welding. The welding target area may mean a section in which the number of overlapping layers according to the bending of the uncoated portion layers 55 (see FIG. 8) is maintained at the maximum along the radial direction of the electrode assembly 110.

Preferably, at least a part of the second current collector plate 176 may be electrically connected to the battery housing 171. In an example, at least a part of the edge portion of the second current collector plate 176 may be interposed and fixed between the inner surface of the battery housing 171 and the sealing gasket 178b. Preferably, the welding target area included in the second current collector plate 176 and the bent surface 56 formed on the negative electrode winding turn portion 52b may be coupled by laser welding. At this time, the welding is performed in a region where the average stacking number of the plurality of uncoated portion layers 55 in the axial direction Y of the bent surface 56 is five or more, or in a region where the average stacking thickness of the plurality of uncoated portion layers 55 is 25 um or more. The laser welding may be replaced by resistance welding, ultrasonic welding, spot welding, or the like.

Meanwhile, although not illustrated in the drawings, the second current collector plate 176 may have a hole provided at a position corresponding to the opening 57 of the electrode assembly 50 described above. In this case, it is possible to secure a region where the electrolyte may circulate even in a region covered by the second current collector plate 176 among the entire region on one surface of the electrode assembly 50.

The sealing body 178 that seals the lower open end of the battery housing 171 may include a cap 178a and a sealing gasket 178b. The sealing gasket 178b may electrically separate the cap 178a from the battery housing 171. The crimping portion 181 may fix the edge of the cap 178a and the sealing gasket 178b together. The cap 178a is provided with a vent portion 179. The configuration of the vent portion 179 is substantially the same as that of the above-described embodiment.

Preferably, the cap 178a may include a conductive metal material. However, since the sealing gasket 178b is interposed between the cap 178a and the battery housing 171, the cap 178a may not have an electrical polarity. The sealing body 178 may be configured to function to seal the open end of the lower part of the battery housing 171 and to discharge gas when the internal pressure of the battery 200 increases above a critical value. The cap 178a may include a vent portion 179 in the edge region of the flat portion. The configuration of the vent portion 179 is substantially the same as that of the above-described embodiment.

Preferably, the terminal 172 electrically connected to the bent portion of the positive electrode winding turn portion 52a through the first current collector plate 144' may be used as a first electrode terminal. Additionally, a part 175 of the upper surface of the battery housing 171 electrically connected to the bent portion of the negative electrode winding turn portion 52b through the second current collector plate 176 that excludes the terminal 172 may be used as a second electrode terminal having a different polarity from the first electrode terminal. As such, when two electrode terminals are positioned on the upper part of the battery 200, it is possible to dispose electrical connection components such as bus bars only on one side of the battery 200. This may result in simplifying the battery pack structure and improving energy density. Additionally, since the part 175 used as the second electrode terminal has a roughly flat shape, a sufficient bonding area may be secured for bonding electrical connection components such as bus bars. Accordingly, the battery 200 may reduce the resistance at the bonding portion of the electrical connection components to a desirable level.

The battery according to the above-described embodiments (modified examples) may be used to manufacture a battery pack.

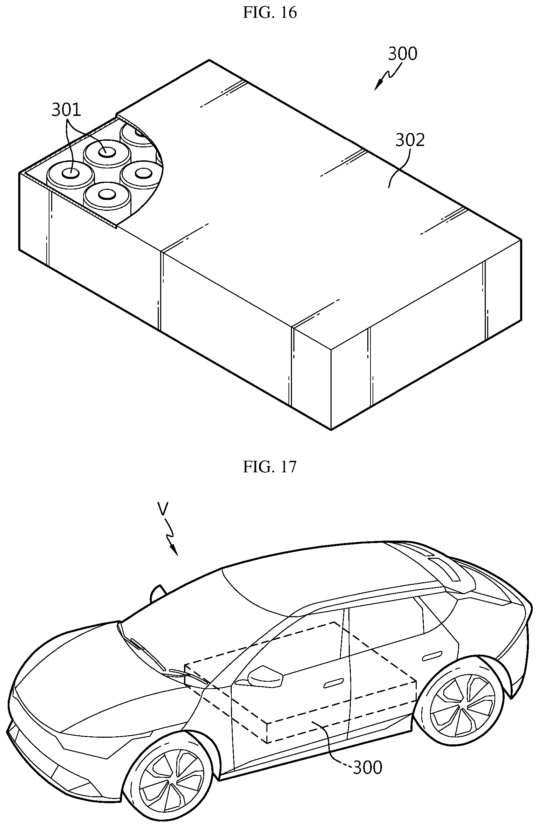

FIG. 16 is a view schematically showing the configuration of a battery pack according to an embodiment of the present disclosure.

Referring to FIG. 16, a battery pack 300 according to an embodiment of the present disclosure includes an assembly where batteries 301 are electrically connected and a pack housing 302 accommodating the same. The battery 301 may be any one of the batteries according to the above-described embodiments (modified examples). In the drawings, for convenience of illustration, components such as bus bars for electrical connection of the batteries 301, cooling units, external terminals, and the like are omitted.

The battery pack 300 may be mounted in a vehicle. The vehicle may be, for example, an electric vehicle, a hybrid vehicle, or a plug-in hybrid vehicle. Examples of the vehicle include a four-wheeled vehicle and a two-wheeled vehicle.

FIG. 17 is a view for describing a vehicle including the battery pack 300 of FIG. 16.

Referring to FIG. 17, the vehicle V according to an embodiment of the present disclosure may include the battery pack 300 according to an embodiment of the present disclosure. The vehicle V may operate by receiving power from the battery pack 300 according to an embodiment of the present disclosure.

According to one aspect of the present disclosure, a jig including at least one protrusion on one surface presses the bending region from above, thereby bending a plurality of uncoated portion layers and forming at least one opening at the same time, and thus at least one opening may be utilized as an electrolyte injection passage to improve electrolyte impregnation.

According to another aspect of the present disclosure, the bending region may include at least one opening, thereby smoothly discharging gas generated inside the battery to the outside.

According to still another aspect of the present disclosure, by bending the bending region of the winding turn portion of the uncoated portion, a bent surface in which the plurality of uncoated portion layers overlap in multiple layers may be formed, and then a current collector plate may be welded to the corresponding region, thereby reducing the resistance of the battery.

According to still another aspect of the present disclosure, the uncoated portion may be manufactured without a separate notching process, thereby preventing performance degradation caused by metal foreign substances generated during the notching process and inducing smooth gas discharge. According to an embodiment of the present disclosure, the process time may be shortened and the process unit cost may be improved by omitting the notching process.

According to still another aspect of the present disclosure, by providing a large-capacity battery pack manufactured using batteries with high energy density and low resistance and a vehicle including the same, the safety of fast charging and the efficiency of energy use may be improved.

The present disclosure has been described hereinabove with reference to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

## Claims

1. An electrode assembly in which a positive electrode, a negative electrode, and a separator interposed therebetween are wound,
wherein at least one of the positive electrode and the negative electrode comprises an uncoated portion at a long side end, and
a winding turn portion of the uncoated portion is provided at one end of the electrode assembly,
wherein the winding turn portion comprises a bending region comprising a plurality of uncoated portion layers configured to be bent by pressure to form a bent surface, and
the bending region comprises at least one opening configured to be surrounded by the bent surface.

2. The electrode assembly according to claim 1,
wherein the ratio of the area occupied by the at least one opening to the area of the bending region is 30% or more and 50% or less.

3. The electrode assembly according to claim 1,
wherein the plurality of uncoated portion layers are bent to overlap along the axial direction.

4. The electrode assembly according to claim 1,
wherein the bending region is configured to be formed by pressure using a jig comprising at least one protrusion on one surface.

5. The electrode assembly according to claim 4,
wherein the bending region corresponds to a region pressed by the jig.

6. The electrode assembly according to claim 4,
wherein the at least one opening of the bending region is configured to be formed in a region where the at least one protrusion of the jig is inserted.

7. The electrode assembly according to claim 4,
wherein the winding turn portion further comprises a flat region that is not pressed by the jig.

8. The electrode assembly according to claim 1,
wherein the at least one opening is configured to be formed in a region corresponding to the region where the separator is disposed.

9. The electrode assembly according to claim 1,
wherein the axial height of the bending region is higher than the axial height of the flat region.

10. A method for manufacturing an electrode assembly comprising:
a first step of preparing a positive electrode and a negative electrode having an uncoated portion at a long side end;
a second step of forming an electrode-separator laminate by laminating the positive electrode, the negative electrode, and a separator at least once so that the separator is interposed between the positive electrode and the negative electrode, and by disposing the positive electrode and the negative electrode so that the positive electrode uncoated portion and the negative electrode uncoated portion are exposed in opposite directions along the short side direction of the separator;
a third step of forming an electrode assembly by winding the electrode-separator laminate around one axis so that the winding turn portion of the positive electrode uncoated portion and the winding turn portion of the negative electrode uncoated portion are exposed in opposite directions along the axial direction; and
a fourth step of pressing at least a part of the winding turn portion using a jig, and forming a bent surface and at least one opening configured to be surrounded by the bent surface by a plurality of uncoated portion layers bent by pressure.

11. The method for manufacturing an electrode assembly according to claim 10,
wherein when the plurality of uncoated portion layers are pressed using the jig in the fourth step, the bent surface is formed and the at least one opening is formed at the same time.

12. The method for manufacturing an electrode assembly according to claim 10,
wherein the jig comprises at least one protrusion on one surface, and
the at least one opening is formed in a region where the at least one protrusion of the jig is inserted.

13. A battery comprising:
an electrode assembly according to any one of claims 1 to 12;
a battery housing that comprises an open end and a closed end opposite thereto, accommodates the electrode assembly through the open end, and is electrically connected to the electrode assembly;
a sealing body that seals the open end of the battery housing;
a terminal electrically connected to the electrode assembly and having a surface exposed to the outside; and
a current collector plate welded to the bent surface and electrically connected to either the battery housing or the terminal.

14. A battery pack comprising a battery according to any one of claims 1 to 13.

15. A vehicle comprising a battery pack according to claim 14.
